# EUROPÄISCHE PATENTSCHRIFT

(11) **EP 3 989 701 B1**
(45) Veröffentlichungstag und Bekanntmachung des Hinweises auf die Patenterteilung: **08.04.2026**
(21) Anmeldenummer: 20727249.3
(22) Anmeldetag: 19.05.2020
(51) Int. Cl.: A01C 7/10, A01C 7/18, A01C 7/06

(54) **PORTIONIERVORRICHTUNG FÜR CHEMISCHES GRANULAT**
PORTIONING DEVICE FOR CHEMICAL GRANULES
DISPOSITIF POUR DIVISER LES GRANULATS CHIMIQUES EN PORTIONS

(30) Priorität: 28.06.2019 DE 102019117555
(43) Veröffentlichungstag der Anmeldung: 04.05.2022
(73) Patentinhaber: Amazonen-Werke H. Dreyer SE & Co. KG, 49205 Hasbergen (DE)
(72) Erfinder: WIEN, Thomas, 28816 Stuhr (DE); HILBERT, Florenz, 48282 Emsdetten (DE); JOHANNABER, Stefan Jan, 49536 Lienen (DE); STEIN, Florian, 49078 Osnabrück (DE); BREUER, Jan-Henrik, 48231 Warendorf (DE); TECKEMEYER, Stephan, 49504 Lotte (DE); WESSELS, Mario, 27777 Ganderkesee (DE)
(86) Internationale Anmeldenummer: PCT/EP2020/063921
(87) Internationale Veröffentlichungsnummer: WO 2020/259925

(56) Entgegenhaltungen:
- EP-A1- 2 550 850
- WO-A1-2017/032691
- DE-A1- 102015 112 813
- DE-C- 832 954
- FR-A1- 2 273 462
- US-B1- 8 061 281

## Beschreibung

Die Erfindung betrifft eine landwirtschaftliche Ausbringmaschine nach dem Oberbegriff des Patentanspruchs 1 und ein Verfahren zum Erzeugen von Granulatportionen nach dem Oberbegriff des Patentanspruchs 8.

Aus der Druckschrift DE 10 2015 112 813 A1 ist ein Dosieraggregat zur Dosierung von körnigem Gut bekannt. Aus der Druckschrift WO 2017/032691 A1 ist eine Dosiervorrichtung für granulares Material mit Sammelbehälter bekannt. Aus der Druckschrift US 8 061 281 B1 ist eine Gartensämaschine bekannt. Aus der Druckschrift DE 832 954 C ist eine Dibbelsaatvorrichtung bekannt. Aus der Druckschrift EP 2 550 850 A1 ist eine Vorrichtung zur Verteilung granularer Objekte bekannt. Aus der Druckschrift FR 2 273 462 A1 ist eine Maschine zum Säen von Reissamen bekannt.

Bei der Aussaat einiger Pflanzensorten, wie beispielsweise Mais, wird gleichzeitig Dünger ausgebracht, um eine Wachstumssteigerung der Pflanzen und somit eine Ertragserhöhung zu erreichen. In diesem Zusammenhang ist es insbesondere bei Reihenkulturen bisher üblich, den Dünger reihenbezogen bandförmig auf den Boden der landwirtschaftlichen Nutzfläche abzulegen. Im Gegensatz hierzu werden die Saatkörner einer Reihe jedoch in einem gleichmäßigen Abstand zueinander abgelegt. Der Abstand zwischen den abgelegten Saatkörnern kann beispielsweise 15cm betragen. Ein vergleichsweise großer Anteil des bandförmig abgelegten Düngers ist für die Pflanzen aufgrund des Abstandes zumindest in der Auflaufphase nicht erreichbar, da das Wurzelwerk noch nicht ausreichend ausgebildet ist.

Um die Zugänglichkeit des abgelegten Düngers für die auflaufenden Pflanzen zu verbessern, sind im Stand der Technik Abgabevorrichtungen bekannt, mittels welchen Dünger portionsweise im Nahbereich eines Saatkorns ablegbar ist. Ein entsprechendes System ist beispielsweise aus der Druckschrift EP 1 825 737 B1 bekannt.

Diese und andere bekannte Lösungen zum portionsweisen Ablegen von chemischem Granulat auf eine landwirtschaftliche Nutzfläche erlauben die Granulatabgabe jedoch nur bei einer beschränkten Fahrgeschwindigkeit und/oder führen häufig zu unbeabsichtigten Fehlportionierungen des Granulats. Die der Erfindung zugrundeliegende Aufgabe besteht somit darin, die bekannten Nachteile bei der portionsweisen Ablage von chemischem Granulat auf eine landwirtschaftliche Nutzfläche zumindest teilweise zu überwinden.

Die Aufgabe wird gelöst durch eine landwirtschaftliche Ausbringmaschine der eingangs genannten Art, wobei die Ausbringmaschine eine Dosiereinrichtung umfasst, mittels welcher die der Portioniervorrichtung zugeführte Granulatmenge einstellbar ist, wobei über die der Portioniervorrichtung zugeführte Granulatmenge die Granulatmenge und Größe einer Granulatportion einstellbar ist.

Die Erfindung macht sich die Erkenntnis zunutze, dass mittels eines rotatorisch antreibbaren Förderelements ein rein mechanisches System zur Bildung von Granulatportionen umsetzbar ist, welches ohne eine zu steuernde elektromechanische Schließvorrichtung, wie etwa einem elektrischen pulsierenden Ventil, sondern durch die Kinematik eines Förderelements Granulatportionen erzeugt. Über die Rotationsgeschwindigkeit des Förderelements und/oder über die Anzahl der Förderelemente kann außerdem die Bereitstellungsfrequenz der Granulatportionen präzise eingestellt werden, wobei auch vergleichsweise hohe Bereitstellungsfrequenzen umsetzbar sind. Dies erlaubt die Ausbringung von gleichmäßig beabstandeten Granulatportionen auch bei hohen Fahrgeschwindigkeiten. Die Bereitstellungsfrequenz kann beispielsweise zwischen 7 und 40 Hertz liegen.

Eine Granulatportion umfasst eine Mehrzahl von Granulatkörnern. Die Granulatkörner können über eine die Granulatkörner mitführende Förderluftströmung in die Portioniervorrichtung eingeleitet werden. In diesem Fall dient die Auslassöffnung zum Ausgeben von aus den von der Förderluftströmung mitgeführten Granulatkörnern erzeugten Granulatportionen. Das zumindest eine Förderelement ist in diesem Fall dazu eingerichtet, die von der Förderluftströmung mitgeführten Granulatkörner während einer Rotationsbewegung zu Granulatportionen zusammenzuführen. Die Granulatkörner mitführende Förderluftströmung, welche über die Einlassöffnung in die Portioniervorrichtung eingeleitet wird, ist vorzugsweise eine kontinuierliche Luft-Granulat-Mischströmung und/oder eine volumetrisch dosierte Luft-Granulat-Mischströmung.

Alternativ können die Granulatkörner auch unter Schwerkrafteinwirkung in die Portioniervorrichtung fallen, ohne dass die Erzeugung einer Förderluftströmung erforderlich ist.

Erfindungsgemäß umfasst die Portioniervorrichtung ein Gehäuse, innerhalb welchem eine Portionierkammer angeordnet ist, wobei das rotatorisch antreibbare Förderelement innerhalb der Portionierkammer angeordnet ist. Die Einlassöffnung und/oder die Auslassöffnung der Portioniervorrichtung sind vorzugsweise an dem Gehäuse ausgebildet. Das Gehäuse kann ein mehrteiliges Gehäuse sein. Vorzugsweise weist das Gehäuse einen Deckel auf, welcher zerstörungsfrei von einer Gehäusebasis abnehmbar sein kann. Durch die Abnahme des Deckels kann die Portionierkammer zu Reinigungs-, Wartungs- oder Reparaturzwecken von außen zugänglich gemacht werden. Dadurch, dass das Gehäuse der Portioniervorrichtung geöffnet werden kann, ist es außerdem möglich, die Konfiguration der Portioniervorrichtung an eine Granulatsorte oder die Erfordernisse einer geplanten Granulatausbringung anzupassen. Beispielsweise kann das Förderelement austauschbar sein, sodass unterschiedliche Förderelemente zur Granulatportionierung verwendet werden können. In diesem Zusammenhang kann die Portioniervorrichtung auch mit einem Einsatz ausgestattet werden, welcher mehrere Förderelemente aufweist. Somit kann auch die Anzahl der Förderelemente an eine Granulatsorte oder die Erfordernisse einer geplanten Granulatausbringung angepasst werden. Die Einlassöffnung ist vorzugsweise über einen Einlasskanal mit der Portionierkammer verbunden. Die Auslassöffnung ist vorzugsweise über einen Auslasskanal mit der Portionierkammer verbunden. Die Portionierkammer kann beispielsweise scheibenförmig ausgebildet sein. Die Granulatkörner mitführende Förderluftströmung gelangt vorzugsweise über eine Kammereingangsöffnung in die Portionierkammer der Portioniervorrichtung. Die Kammereingangsöffnung ist vorzugsweise an einer seitlichen Stirnseite der Portionierkammer angeordnet und in Rotationsrichtung des Förderelementes ausgerichtet, so dass die Förderluftströmung in Rotationsrichtung einleitbar ist. Die erzeugten Granulatportionen verlassen die Portionierkammer vorzugsweise durch eine Kammerausgangsöffnung. Die Kammerausgangsöffnung ist vorzugsweise an einer sich in Umfangsrichtung erstreckenden Innenmantelfläche angeordnet, wobei die Innenmantelfläche die Portionierkammer in radialer Richtung begrenzt.

In einer Weiterbildung der erfindungsgemäßen landwirtschaftlichen Ausbringmaschine ist das Förderelement dazu eingerichtet, während einer Rotationsbewegung mit in der Portionierkammer befindlichen Granulatkörnern in Kontakt zu kommen und diese Granulatkörner nach Kontaktherstellung vor sich herzuschieben. Das Förderelement fungiert somit als Mitnehmer und sammelt die in der Portionierkammer befindlichen Granulatkörner während der Rotationsbewegung ein. Die Anzahl der Granulatkörner, welche das Förderelement während der Rotationsbewegung vor sich herschiebt, steigt während seiner Bewegung zwischen der Kammereingangsöffnung und der Kammerausgangsöffnung der Portionierkammer an.

Erfindungsgemäß ist das Förderelement dazu eingerichtet, während einer Rotationsbewegung in der Portionierkammer befindliche Granulatkörner rotatorisch zu beschleunigen. Die rotatorische Beschleunigung wird dadurch umgesetzt, dass die Rotationsgeschwindigkeit des Förderelements höher ist als die Bewegungsgeschwindigkeit der sich in der Portionierkammer befindenden Granulatkörner. Die Granulatkörner, welche das Förderelement vor sich herschiebt, bewegen sich vorzugsweise auf einer nach außen gerichteten Spiralbahn, da die Zentrifugalkraft die mitgeführten Granulatkörner radial nach außen bewegt. Die Granulatkörner sammeln sich somit an der die Portionierkammer radial begrenzenden Bewandung an, sodass dort eine Granulatportion gebildet wird oder eine bereits existente Granulatportion vergrößert wird. Die von dem Förderelement mitgenommenen Granulatkörner werden durch die Zentrifugalkraft also nach außen hin zusammengeschoben. Die Granulatkörner werden dann zwischen der die Portionierkammer radial begrenzenden Bewandung und den die Portionierkammer seitlich begrenzenden Stirnflächen geführt und von dem Förderelement rotatorisch bewegt.

In einer weiteren bevorzugten Ausführungsform der erfindungsgemäßen landwirtschaftlichen Ausbringmaschine wird die Portionierkammer in radialer Richtung von einer zumindest teilweise um die Rotationsachse des Förderelements umlaufenden Bewandung des Gehäuses begrenzt. Die Bewandung bildet eine Innenmantelfläche, von welcher in Granulatportion zumindest abschnittsweise während der Rotationsbewegung des Förderelements geführt wird. In der die Portionierkammer in radialer Richtung begrenzenden Bewandung ist die Kammerausgangsöffnung ausgebildet, über welche die Granulatportionen die Portionierkammer verlassen. Die Granulatportionen werden somit in tangentialer Richtung von dem Förderelement aus der Portionierkammer herausgeschleudert.

Es ist außerdem eine erfindungsgemäße landwirtschaftliche Ausbringmaschine vorteilhaft, bei welcher das Förderelement länglich und/oder als ein sich radial nach außen erstreckender Flügel ausgebildet ist. Die Portioniervorrichtung kann auch mehrere Förderelemente aufweisen, welche beispielsweise jeweils als sich nach außen erstreckende Flügel ausgebildet sein können. Die sich radial nach außen erstreckenden mehreren Förderelemente können, insbesondere sternförmig, um eine gemeinsame Antriebsachse herum angeordnet sein. Über die Anzahl der Förderelemente kann die Bereitstellungsfrequenz der Granulatportionen ohne Anpassung der Rotationsgeschwindigkeit der Förderelemente verändert werden. Die Förderelemente können beispielsweise Bestandteile eines mehrflügeligen Rotors sein, welcher über eine Antriebseinrichtung rotatorisch antreibbar ist.

Es ist ferner eine erfindungsgemäße landwirtschaftliche Ausbringmaschine bevorzugt, bei welcher das Förderelement mehrteilig und/oder zumindest abschnittsweise aus einem elastisch verformbaren Material ausgebildet ist. Vorzugsweise weist das Förderelement eine Kontaktfläche auf, welche während der Rotation mit den in der Portionierkammer befindlichen Granulatkörnern in Kontakt kommt. Die Kontaktfläche ist vorzugsweise aus dem elastisch verformbaren Material ausgebildet, sodass die Abprallneigung der Granulatkörner von dem Förderelement reduziert wird. Auf diese Weise kann die Packungsdichte der Granulatportion erhöht werden und das Risiko von Ausreißern aus der Granulatportion wird reduziert.

In einer weiteren Ausführungsform der erfindungsgemäßen landwirtschaftlichen Ausbringmaschine umfasst das Förderelement einen verformbaren Körper, insbesondere einen verformbaren Gummikörper. Der verformbare Körper trägt vorzugsweise die Kontaktfläche des Förderelements, welche bei einer Rotationsbewegung des Förderelements mit den Granulatkörnern in Kontakt kommt. Der Gummikörper ist langlebig und robust gegen äußere Beanspruchung und führt zu einer erheblichen Reduzierung der Abprallneigung der Granulatkörner. Vorzugsweise liegt der verformbare Körper während der Rotationsbewegung des Förderelements zumindest entlang eines Drehwinkelbereichs an der die Portionierkammer radial begrenzenden Bewandung an. Auf diese Weise erfolgt eine spielfreie Führung der Granulatportion und eine Abdichtung gegenüber der Bewandung. Ferner wird die Spaltbildung vermieden, da sich der elastische Körper stets an die die Portionierkammer radial begrenzende Bewandung anlegt.

Es ist ferner eine erfindungsgemäße landwirtschaftliche Ausbringmaschine vorteilhaft, bei welcher die Portioniervorrichtung eine Antriebseinrichtung aufweist. Die Antriebseinrichtung ist dazu eingerichtet, dass Förderelement rotatorisch anzutreiben. Die Antriebseinrichtung kann eine elektrische, hydraulische oder pneumatische Antriebseinrichtung sein. Vorzugsweise ist die Antriebseinrichtung als Elektromotor ausgebildet oder umfasst einen Elektromotor. Die Antriebseinrichtung kann mit einer Steuerungseinrichtung gekoppelt sein, über welche die Rotationsfrequenz einstellbar ist. Die Antriebseinrichtung ist vorzugsweise an dem Gehäuse der Portioniervorrichtung befestigt. Die Antriebseinrichtung weist vorzugsweise eine Antriebswelle auf, wobei das Förderelement an der Antriebswelle befestigt ist.

Die Fördereinrichtung kann zum Erzeugen einer Granulatkörner mitführenden Förderluftströmung ausgebildet sein und beispielsweise ein Gebläse umfassen, mittels welchem die Förderluftströmung erzeugbar ist. Der Förderluftströmung wird dann chemisches Granulat aus dem Vorratsbehälter zugeführt, sodass sich die Granulatkörner mitführende Förderluftströmung ergibt. Die Portioniervorrichtung kann zum Erzeugen von Granulatportionen aus den von der Förderluftströmung mitgeführten Granulatkörnern ausgebildet sein.

Die landwirtschaftliche Ausbringmaschine ist vorzugsweise dazu eingerichtet, Granulatportionen mit einer Portionslänge zwischen 3cm und 6 cm, insbesondere zwischen 4cm und 5cm, auf die landwirtschaftliche Nutzfläche abzulegen. Die landwirtschaftliche Ausbringmaschine ist vorzugsweise dazu eingerichtet, Granulatportionen mit einer Portionsbreite zwischen 1cm und 3cm, insbesondere Granulatportionen mit einer Portionsbreite von ca. 2cm, auf die landwirtschaftliche Nutzfläche abzulegen.

Erfindungsgemäß umfasst die landwirtschaftliche Ausbringmaschine eine Dosiereinrichtung, mittels welcher die der Portioniervorrichtung zugeführte Granulatmenge einstellbar ist. Erfindungsgemäß ist die Granulatmenge und Größe einer Granulatportion über die der Portioniervorrichtung zugeführte Granulatmenge einstellbar.

Die der Erfindung zugrundeliegende Aufgabe wird ferner durch ein Verfahren der eingangs genannten Art gelöst, mit dem Schritt: Einstellen der der Portioniervorrichtung zugeführten Granulatmenge mittels einer Dosiereinrichtung der landwirtschaftlichen Ausbringmaschine; wobei über die der Portioniervorrichtung zugeführte Granulatmenge die Granulatmenge und Größe einer Granulatportion eingestellt werden.

Vorzugsweise werden die Granulatkörner über eine die Granulatkörner mitführende Förderluftströmung in die Portioniervorrichtung eingeleitet. Vorzugsweise werden die von der Förderluftströmung mitgeführten Granulatkörner mittels des Förderelements zu Granulatportionen zusammengeführt. Alternativ können die Granulatkörner unter Schwerkrafteinwirkung in die Portioniervorrichtung fallen, ohne dass die Erzeugung einer Förderluftströmung erforderlich ist.

Vorzugsweise wird beim Ausführen des erfindungsgemäßen Verfahrens eine Portioniervorrichtung nach einer der vorstehend beschriebenen Ausführungsformen verwendet.

Das erfindungsgemäße Verfahren kann ferner das Ausleiten der, insbesondere aus den von der Förderluftströmung mitgeführten Granulatkörnern erzeugten, Granulatportionen aus der Portioniervorrichtung umfassen.

Bei dem erfindungsgemäßen Verfahren werden die Granulatkörner, insbesondere die Granulatkörner mitführende Förderluftströmung, in eine Portionierkammer der Portioniervorrichtung eingeleitet, innerhalb welcher das Förderelement eine Rotationsbewegung ausführt. Alternativ oder zusätzlich werden die in der Portionierkammer befindlichen Granulatkörner durch das rotierende Förderelement, insbesondere entlang eines zumindest teilweise um die Rotationsachse des Förderelements umlaufenden Förderpfads, mitgenommen. Erfindungsgemäß werden die in der Portionierkammer befindlichen Granulatkörner durch das rotierende Förderelement rotatorisch beschleunigt. Insbesondere erfolgt ein Herausschleudern der Granulatportionen aus der Portionierkammer der Portioniervorrichtung in Richtung einer Auslassöffnung der Portioniervorrichtung. Beim Mitnehmen der in der Portionierkammer befindlichen Granulatkörner durch das rotierende Förderelement kommen die in der Portionierkammer befindlichen Granulatkörner mit dem Förderelement in Kontakt und das Förderelement schiebt die Granulatkörner nach Kontaktherstellung vor sich her. Durch ein rotatorisches Beschleunigen der in der Portionierkammer befindlichen Granulatkörner werden diese durch die Zentrifugalkraft radial nach außen bewegt, sodass sich die Granulatkörner an der die Portionierkammer radial begrenzten Bewandung ansammeln und dort Granulatportionen ausbilden oder bereits existente Granulatportionen vergrößern. Die Granulatportion wird dann von dem Förderelement und der Innenmantelfläche des Gehäuses gemeinsam geführt, bevor es aus der Portionierkammer herausgeschleudert wird. Das Herausschleudern der Granulatportionen aus der Portionierkammer wird vorzugsweise durch eine Kammerausgangsöffnung in der die Portionierkammer radial begrenzenden Bewandung umgesetzt, welche die Bewandung unterbricht und somit das Herausschleudern erlaubt. Die Granulatportionen werden vorzugsweise in tangentialer Richtung aus der Portionierkammer herausgeschleudert.

In einer weiteren bevorzugten Ausführungsform des erfindungsgemäßen Verfahrens ist die Rotationsgeschwindigkeit des Förderelements höher als die Bewegungsgeschwindigkeit der in die Portionierkammer eingeleiteten Granulatkörner. Das Förderelement kann auf diese Weise während einer Rotationsbewegung die in die Portionierkammer eingeleiteten Granulatkörner einholen und mitnehmen, sodass die Granulatkörner zusammengeführt werden.

Es ist außerdem ein erfindungsgemäßes Verfahren vorteilhaft, bei welchem der Aufprall der Granulatkörner auf das Förderelement mittels einer elastisch verformbaren Kontaktfläche des Förderelements abgedämpft wird. Die Kontaktfläche des Förderelements kommt während der Rotationsbewegung des Förderelements in Kontakt mit den in der Portionierkammer befindlichen Granulatkörnern. Die elastisch verformbare Kontaktfläche des Förderelements kann beispielsweise Bestandteil eines Gummikörpers des Förderelements sein.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel einer Portioniervorrichtung in einer perspektivischen Darstellung;
- Fig. 2: ein Ausführungsbeispiel einer Portioniervorrichtung während der Granulatportionierung in einem ersten Zustand in einer seitlichen Schnittdarstellung;
- Fig. 3: die in der Fig. 2 abgebildete Portioniervorrichtung während der Granulatportionierung in einem zweiten Zustand in einer seitlichen Schnittdarstellung;
- Fig. 4: die in der Fig. 2 abgebildete Portioniervorrichtung während der Granulatportionierung in einem dritten Zustand in einer seitlichen Schnittdarstellung;
- Fig. 5: die in der Fig. 2 abgebildete Portioniervorrichtung während der Granulatportionierung in einem vierten Zustand in einer seitlichen Schnittdarstellung; und
- Fig. 6: die in der Fig. 2 abgebildete Portioniervorrichtung während der Granulatportionierung in einem fünften Zustand in einer seitlichen Schnittdarstellung.

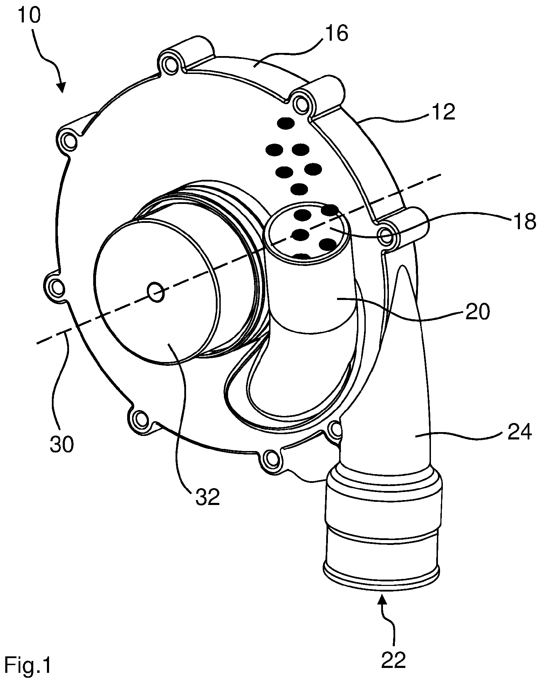

Die Fig. 1 zeigt eine Portioniervorrichtung 10 für chemisches Granulat, nämlich für Dünger. Die dargestellte Portioniervorrichtung 10 kann beispielsweise Bestandteil einer landwirtschaftlichen Ausbringmaschine sein, mittels welcher chemisches Granulat auf eine landwirtschaftliche Nutzfläche abgelegt werden kann. Eine entsprechende Ausbringmaschine weist beispielsweise einen Vorratsbehälter für das Granulat auf, wobei der Vorratsbehälter mit einer Fördereinrichtung verbunden ist. Die Fördereinrichtung kann ein Gebläse umfassen und dazu ausgebildet sein, eine Granulatkörner 100 mitführende Förderluftströmung zu erzeugen. Die Portioniervorrichtung 10 dient zum Erzeugen von Granulatportionen 102 aus den von der Förderluftströmung mitgeführten Granulatkörnern 100. Eine entsprechende landwirtschaftliche Ausbringmaschine weist ferner eine Ablageeinrichtung zum Ablegen der erzeugten Granulatportionen 102 auf die landwirtschaftliche Nutzfläche auf.

Die Portioniervorrichtung 10 weist ein mehrteiliges und aus Kunststoff ausgebildetes Gehäuse 12 auf. Das Gehäuse 12 umfasst eine Gehäusebasis 16, deren Innenbereich mittels eines Deckels verschlossen ist. Die Gehäusebasis 16 und der Deckel können zerstörungsfrei voneinander lösbar aneinander befestigt sein. Zur Befestigung des Deckels an der Gehäusebasis 16 können Befestigungselemente, wie beispielsweise Schrauben, eingesetzt werden.

Das Gehäuse 12 umfasst eine Einlassöffnung 18, welche an einem stirnseitigen Ende eines Einlasskanals 20 angeordnet ist. Über die Einlassöffnung 18 kann die Granulatkörner 100 mitführende Förderluftströmung in die Portioniervorrichtung 10 eingeleitet werden. Über den Einlasskanal 20 wird die Granulatkörner 100 mitführende Förderluftströmung einer Portionierkammer 26 zugeleitet, welche innerhalb des Gehäuses 12 angeordnet ist.

Innerhalb der Portionierkammer 26 ist ein rotatorisch angetriebenes Förderelement 28 angeordnet, welches dazu eingerichtet ist, die von der Förderluftströmung mitgeführten Granulatkörner 100 während einer Rotationsbewegung zu Granulatportionen 102 zusammenzuführen. Der rotatorische Antrieb des Förderelements 28 erfolgt dabei über eine als Elektromotor ausgebildete Antriebseinrichtung 32. Das Förderelement 28 führt während des Betriebs der Portioniervorrichtung 10 eine Rotationsbewegung um die Rotationsachse 30 aus.

Die in dem Gehäuse 12 befindliche Portionierkammer 26 ist über einen Auslasskanal 24 mit einer Auslassöffnung 22 verbunden. Die Auslassöffnung 22 dient zum Ausgeben der innerhalb der Portionierkammer 26 erzeugten Granulatportionen 102.

Die Portioniervorrichtung 10 stellt somit ein mechanisches System zur Bildung von Granulatportionen 102 dar. Entsprechende Granulatportionen 102 umfassen jeweils eine Mehrzahl von Granulatkörnern 100. Die in die Portioniervorrichtung eingeleitete Granulatkörner 100 mitführende Förderluftströmung ist eine kontinuierliche Luft-Granulat-Mischströmung. Das Granulat wird einer Luftströmung volumetrisch zudosiert. Über eine Dosiereinrichtung der Ausbringmaschine kann die in die Luftströmung eingespeiste Menge an Granulat eingestellt werden.

Die Portioniervorrichtung 10 erlaubt die Bereitstellung von Granulatportionen mit einer Frequenz im Bereich von 7 bis 40 Hertz.

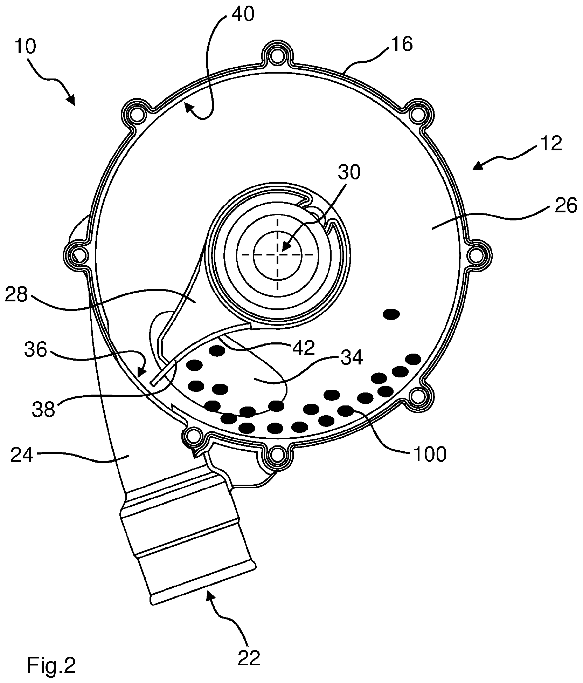

Die Fig. 2 bis 6 zeigen eine Portioniervorrichtung 10 ohne Deckel während der Granulatportionierung. Aufgrund des fehlenden Deckels ist die innerhalb des Gehäuses 12 angeordnete Portionierkammer 26 sichtbar. Die Portionierkammer 26 weist eine scheibenförmige Grundform auf.

Die Portionierkammer 26 ist über eine Kammereingangsöffnung 34 mit einem Einlasskanal 20 verbunden. Die Kammereingangsöffnung 34 ist an einer seitlichen Stirnseite der Portionierkammer 26 angeordnet. Ferner ist die Portionierkammer 26 über eine Kammerausgangsöffnung 36 mit einem Auslasskanal 24 verbunden. Die Kammerausgangsöffnung 36 ist in einer die Portionierkammer 26 radial begrenzenden Bewandung 40 ausgebildet. Die Bewandung 40 ist eine sich in Umfangsrichtung erstreckende Innenmantelfläche, welche auf einer Kreisbahn umläuft. Aufgrund der Anordnung der Kammerausgangsöffnung 36 in der Bewandung 40 werden erzeugte Granulatportionen 102 in tangentialer Richtung aus der Portionierkammer 26 herausgeschleudert.

Das Förderelement 28 ist länglich und mehrteilig ausgebildet. Ferner ist das Förderelement 28 als ein sich radial nach außen erstreckender Flügel ausgebildet. Das Förderelement 28 weist eine Kontaktfläche 42 auf, welche während einer Rotationsbewegung des Förderelements 28 in Kontakt mit den innerhalb der Portionierkammer 26 befindlichen Granulatkörnern 100 kommt. Die Kontaktfläche 42 wird von einem elastisch verformbaren Gummikörper 38 getragen. Der Gummikörper 38 reduziert die Abprallneigung der mit dem Förderelement 28 in Kontakt kommenden Granulatkörner 100.

Bei dem in der Fig. 2 dargestellten Zustand befindet sich das Förderelement 28 auf Höhe eines oberen Abschnitts der Kammereingangsöffnung 34. Die über die Förderluftströmung in die Portionierkammer 26 eingeleiteten Granulatkörner 100 liegen in Rotationsrichtung vor dem Förderelement 28. Das Förderelement 28 wird derart von der Antriebseinrichtung 32 bewegt, dass die in die Portionierkammer 26 eingeleiteten Granulatkörner von dem Förderelement 28 eingeholt werden und somit innerhalb der Portionierkammer 26 mit dem Förderelement 28 in Kontakt kommen.

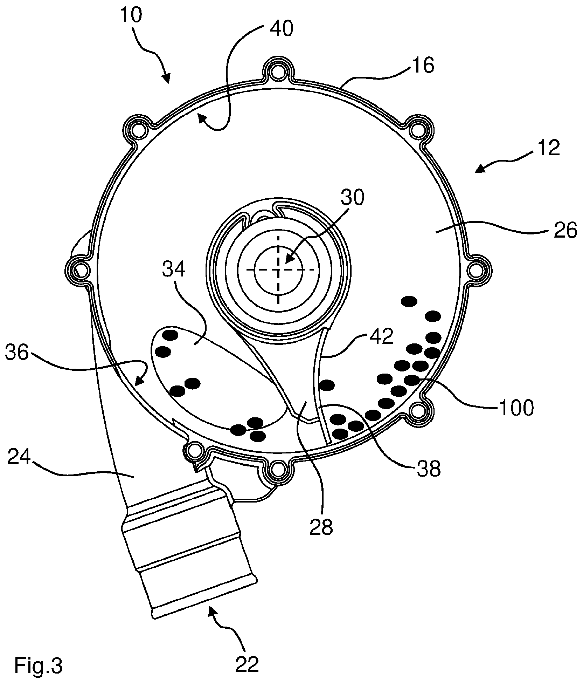

Die Fig. 3 zeigt, wie bereits einige Granulatkörner 100 von dem Förderelement 28 eingeholt wurden und nach der Kontaktherstellung mit dem Förderelement 28 vor dem Förderelement 28 hergeschoben werden. Das Förderelement 28 beschleunigt die eingeholten Granulatkörner 100 rotatorisch, sodass die Granulatkörner 100 durch die Zentrifugalkraft radial nach außen bewegt werden. Die von dem Förderelement 28 eingesammelten Granulatkörner 100 bewegen sich somit auf einer nach außen gerichtet Spiralbahn.

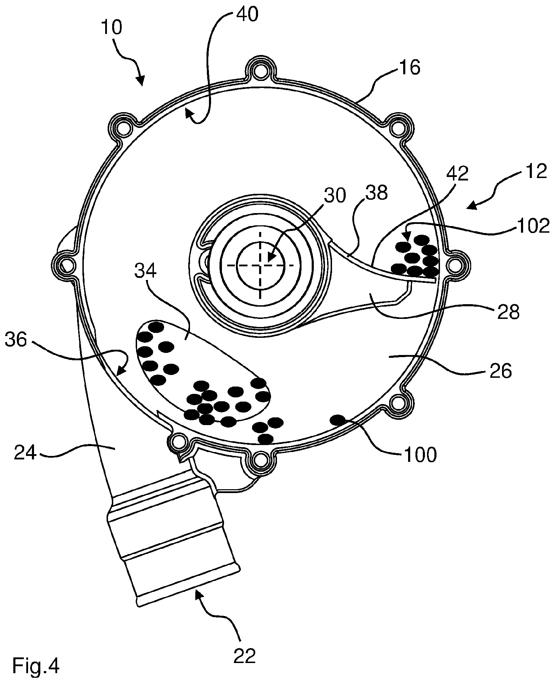

Die Fig. 4 zeigt, dass die durch die Zentrifugalkraft radial nach außen bewegten Granulatkörner 100 sich an der die Portionierkammer 26 radial begrenzenden Bewandung 40 ansammeln und dort Granulatportionen 102 ausbilden. Die von dem Förderelement 28 mitgenommenen Granulatkörner 100 werden also durch die Zentrifugalkraft nach außen hin zusammengeschoben. Die Granulatportion 102 wird dann von dem Förderelement 28 und der Innenmantelfläche des Gehäuses 12 gemeinsam geführt.

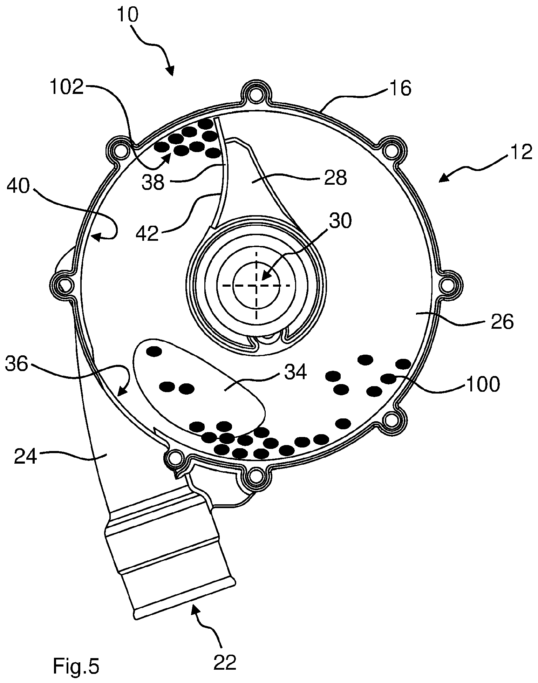

Die Fig. 5 zeigt, dass die Granulatportion 102 an der die Portionierkammer 26 radial begrenzenden Bewandung 40 vor dem Förderelement 28 hergeschoben wird, bevor die Granulatportion 102 auf Höhe der Kammerausgangsöffnung 36 in tangentialer Richtung aus der Portionierkammer 26 herausgeschleudert wird.

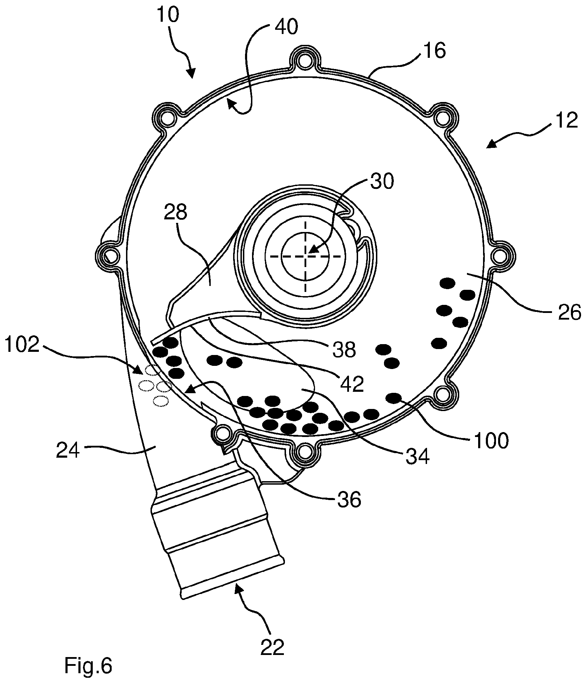

Das Herausschleudern der Granulatportion 102 aus der Portionierkammer 26 ist in der Fig. 6 dargestellt. Die aus der Portionierkammer 26 herausgeschleuderte Granulatportion 102 verlässt die Portioniervorrichtung 10 anschließend über die am stirnseitigen Ende des Auslasskanals 24 angeordneten Auslassöffnung 22.

Während der Erzeugung der Granulatportionen 102 mittels des Förderelements 28 wurden bereits neue Granulatkörner 100 über die Förderluftströmung in die Portionierkammer 26 eingeleitet. Die zwischenzeitlich in die Portionierkammer 26 eingeleiteten Granulatkörner 100 werden im Rahmen der nachfolgenden Umdrehung des Förderelements 28 zu einer Granulatportion 102 zusammengeführt.

Alternativ zu der dargestellten Ausführungsform kann die Portioniervorrichtung 10 auch mehrere Förderelemente 28 aufweisen, welche beispielsweise als sich nach in radialer Richtung außen erstreckende Flügel ausgebildet sein können. Die mehreren Förderelemente 28 können beispielsweise sternförmig um die Rotationsachse 30 angeordnet sein und von einer gemeinsamen Antriebseinrichtung 32 angetrieben werden.

### Bezugszeichen

- 10: Portioniervorrichtung
- 12: Gehäuse
- 16: Gehäusebasis
- 18: Einlassöffnung
- 20: Einlasskanal
- 22: Auslassöffnung
- 24: Auslasskanal
- 26: Portionierkammer
- 28: Förderelement
- 30: Rotationsachse
- 32: Antriebseinrichtung
- 34: Kammereingangsöffnung
- 36: Kammerausgangsöffnung
- 38: Gummikörper
- 40: Bewandung
- 42: Kontaktfläche

- 100: Granulatkörner
- 102: Granulatportion

## Patentansprüche

1. Landwirtschaftliche Ausbringmaschine, mit
- einem Vorratsbehälter für chemisches Granulat;
- zumindest einer Portioniervorrichtung (10) zum Erzeugen von Granulatportionen (102) aus Granulatkörnern (100);
- einer Fördereinrichtung zum Fördern von Granulatkörnern (100) aus dem Vorratsbehälter in die Portioniervorrichtung (10);
und
- zumindest einer Ablageeinrichtung zum Ablegen der erzeugten Granulatportionen (102) auf eine landwirtschaftliche Nutzfläche;
wobei die Portioniervorrichtung (10) eine Einlassöffnung (18) für Granulatkörner (100), eine Auslassöffnung (22) zum Ausgeben von aus den Granulatkörnern (100) erzeugten Granulatportionen (102), und zumindest ein rotatorisch antreibbares Förderelement (28) umfasst, wobei das Förderelement (28) dazu eingerichtet ist, in die Portioniervorrichtung (100) eingeleitete Granulatkörner (100) während einer Rotationsbewegung zu Granulatportionen (102) zusammenzuführen;
wobei die Portioniervorrichtung (10) ein Gehäuse (12) umfasst, innerhalb welchem eine Portionierkammer (26) angeordnet ist, wobei das rotatorisch antreibbare Förderelement (28) innerhalb der Portionierkammer (26) angeordnet ist;
wobei das Förderelement (28) der Portioniervorrichtung (10) dazu eingerichtet ist, während einer Rotationsbewegung in der Portionierkammer (26) befindliche Granulatkörner (100) derart rotatorisch zu beschleunigen, dass die in der Portionierkammer (26) befindlichen Granulatkörner (100) durch die Zentrifugalkraft radial nach außen bewegt werden, sodass sich die Granulatkörner (100) an der die Portionierkammer (26) radial begrenzten Bewandung ansammeln und dort Granulatportionen (102) ausbilden oder bereits existente Granulatportionen (102) vergrößern;
**dadurch gekennzeichnet, dass** die Ausbringmaschine eine Dosiereinrichtung umfasst, mittels welcher die der Portioniervorrichtung (10) zugeführte Granulatmenge einstellbar ist, wobei über die der Portioniervorrichtung (10) zugeführte Granulatmenge die Granulatmenge und Größe einer Granulatportion (102) einstellbar ist.

2. Landwirtschaftliche Ausbringmaschine nach Anspruch 1,
**dadurch gekennzeichnet, dass** das Förderelement (28) der Portioniervorrichtung (10) dazu eingerichtet ist, während einer Rotationsbewegung mit in der Portionierkammer (26) befindlichen Granulatkörnern (100) in Kontakt zu kommen und diese Granulatkörner (100) nach Kontaktherstellung vor sich herzuschieben.

3. Landwirtschaftliche Ausbringmaschine nach einem der vorstehenden Ansprüche,
**dadurch gekennzeichnet, dass** die Portionierkammer (26) der Portioniervorrichtung (10) in radialer Richtung von einer zumindest teilweise um die Rotationsachse (30) des Förderelements (28) umlaufenden Bewandung (40) des Gehäuses (12) begrenzt wird.

4. Landwirtschaftliche Ausbringmaschine nach einem der vorstehenden Ansprüche,
**dadurch gekennzeichnet, dass** das Förderelement (28) der Portioniervorrichtung (10) länglich und/oder als ein sich radial nach außen erstreckender Flügel ausgebildet ist.

5. Landwirtschaftliche Ausbringmaschine nach einem der vorstehenden Ansprüche,
**dadurch gekennzeichnet, dass** das Förderelement (28) der Portioniervorrichtung (10) mehrteilig und/oder zumindest abschnittsweise aus einem elastisch verformbaren Material ausgebildet ist.

6. Landwirtschaftliche Ausbringmaschine nach einem der vorstehenden Ansprüche,
**dadurch gekennzeichnet, dass** das Förderelement (28) der Portioniervorrichtung (10) einen verformbaren Körper, insbesondere einen verformbaren Gummikörper (38), umfasst.

7. Landwirtschaftliche Ausbringmaschine nach einem der vorstehenden Ansprüche,
**dadurch gekennzeichnet, dass** die Portioniervorrichtung (10) eine Antriebseinrichtung (32) umfasst, welche dazu eingerichtet ist, das Förderelement (28) der Portioniervorrichtung (10) rotatorisch anzutreiben.

8. Verfahren zum Erzeugen von Granulatportionen (102) mittels einer Portioniervorrichtung (10) einer landwirtschaftlichen Ausbringmaschine, mit den Schritten:
- Einleiten von Granulatkörnern (100) in die Portioniervorrichtung (10);
- Einleiten der Granulatkörner (100) in eine Portionierkammer (26) der Portioniervorrichtung (10), innerhalb welcher zumindest ein rotatorisch angetriebenes Förderelement (28) eine Rotationsbewegung ausführt;
- rotatorisches Beschleunigen der in der Portionierkammer (26) befindlichen Granulatkörner (100) durch das rotierende Förderelement (28);
- Zusammenführen der in die Portioniervorrichtung (10) eingeleiteten Granulatkörner (100) mittels des zumindest einen rotatorisch angetriebenen Förderelements (28) der Portioniervorrichtung (10) zu Granulatportionen (102) derart, dass die in der Portionierkammer (26) befindlichen Granulatkörner (100) durch die Zentrifugalkraft radial nach außen bewegt werden, sodass sich die Granulatkörner (100) an der die Portionierkammer (26) radial begrenzten Bewandung ansammeln und dort Granulatportionen (102) ausbilden oder bereits existente Granulatportionen (102) vergrößern; **gekennzeichnet durch** den Schritt:
- Einstellen der der Portioniervorrichtung (10) zugeführten Granulatmenge mittels einer Dosiereinrichtung der landwirtschaftlichen Ausbringmaschine;
wobei über die der Portioniervorrichtung (10) zugeführte Granulatmenge die Granulatmenge und Größe einer Granulatportion (102) eingestellt werden.

9. Verfahren nach Anspruch 8,
**gekennzeichnet durch** zumindest einen der folgenden Schritte:
- Mitnehmen der in der Portionierkammer (26) befindlichen Granulatkörner (100) durch das rotierende Förderelement (28), insbesondere entlang eines zumindest teilweise um die Rotationsachse (30) des Förderelements (28) umlaufenden Förderpfads;
- Herausschleudern der Granulatportionen (102) aus der Portionierkammer (26) der Portioniervorrichtung (10) in Richtung einer Auslassöffnung (22) der Portioniervorrichtung (10).

10. Verfahren nach Anspruch 8 oder 9,
**dadurch gekennzeichnet, dass** die Rotationsgeschwindigkeit des Förderelements (28) höher ist als die Bewegungsgeschwindigkeit der in die Portionierkammer (26) eingeleiteten Granulatkörner (100).

11. Verfahren nach einem der Ansprüche 8 bis 10,
**dadurch gekennzeichnet, dass** der Aufprall der Granulatkörner (100) auf das Förderelement (28) mittels einer elastisch verformbaren Kontaktfläche (42) des Förderelements (28) abgedämpft wird.

## Claims

1. Agricultural spreading machine, comprising
- a storage container for chemical granulate;
- at least one portioning device (10) for producing granulate portions (102) from granulate grains (100);
- a conveying apparatus for conveying granulate grains (100) from the storage container into the portioning device (10);
and
- at least one depositing apparatus for depositing the produced granulate portions (102) onto an agricultural area;
wherein the portioning device (10) comprises an inlet opening (18) for granulate grains (100), an outlet opening (22) for dispensing granulate portions (102) produced from the granulate grains (100), and at least one rotationally drivable conveying element (28), wherein the conveying element (28) is configured to combine granulate grains (100) introduced into the portioning device (100) into granulate portions (102) during a rotational movement;
wherein the portioning device (10) comprises a housing (12) within which a portioning chamber (26) is arranged, wherein the rotationally drivable conveying element (28) is arranged within the portioning chamber (26);
wherein the conveying element (28) of the portioning device (10) is configured to rotationally accelerate, during a rotational movement, granulate grains (100) located in the portioning chamber (26) in such a way that the granulate grains (100) located in the portioning chamber (26) are moved radially outward by the centrifugal force, with the result that the granulate grains (100) accumulate on the wall radially delimited the portioning chamber (26) and form granulate portions (102) there or increase the size of already existing granulate portions (102);
**characterized in that** the spreading machine comprises a metering apparatus by means of which the granulate quantity supplied to the portioning device (10) is adjustable, wherein the granulate quantity and size of a granulate portion (102) are adjustable via the granulate quantity supplied to the portioning device (10).

2. Agricultural spreading machine according to claim 1,
**characterized in that** the conveying element (28) of the portioning device (10) is configured to come into contact, during a rotational movement, with granulate grains (100) located in the portioning chamber (26) and to push these granulate grains (100) in front thereof after contact has been established.

3. Agricultural spreading machine according to either of the preceding claims,
**characterized in that** the portioning chamber (26) of the portioning device (10) is delimited in a radial direction by a wall (40) of the housing (12), which wall at least partially encircles the rotation axis (30) of the conveying element (28).

4. Agricultural spreading machine according to any of the preceding claims,
**characterized in that** the conveying element (28) of the portioning device (10) is elongate and/or designed as a wing extending radially outward.

5. Agricultural spreading machine according to any of the preceding claims,
**characterized in that** the conveying element (28) of the portioning device (10) is made of multiple parts and/or at least in portions is made of an elastically deformable material.

6. Agricultural spreading machine according to any of the preceding claims,
**characterized in that** the conveying element (28) of the portioning device (10) comprises a deformable body, in particular a deformable rubber body (38).

7. Agricultural spreading machine according to any of the preceding claims,
**characterized in that** the portioning device (10) comprises a drive apparatus (32) configured to rotationally drive the conveying element (28) of the portioning device (10).

8. Method for producing granulate portions (102) by means of a portioning device (10) of an agricultural spreading machine, comprising the steps of:
- introducing granulate grains (100) into the portioning device (10);
- introducing the granulate grains (100) into a portioning chamber (26) of the portioning device (10), within which at least one rotationally driven conveying element (28) executes a rotational movement;
- the rotating conveying element (28) rotationally accelerating the granulate grains (100) located in the portioning chamber (26);
- combining the granulate grains (100) introduced into the portioning device (10) into granulate portions (102) by means of the at least one rotationally driven conveying element (28) of the portioning device (10) in such a way that the granulate grains (100) located in the portioning chamber (26) are moved radially outward by the centrifugal force, with the result that the granulate grains (100) accumulate on the wall radially delimited the portioning chamber (26) and form granulate portions (102) there or increase the size of already existing granulate portions (102); **characterized by** the step of:
- adjusting, by means of a metering apparatus of the agricultural spreading machine, the granulate quantity supplied to the portioning device (10);
wherein the granulate quantity and size of a granulate portion (102) are adjusted via the granulate quantity supplied to the portioning device (10).

9. Method according to claim 8,
**characterized by** at least one of the following steps:
- the rotating conveying element (28) carrying along the granulate grains (100) located in the portioning chamber (26), in particular along a conveying path that at least partially encircles the rotation axis (30) of the conveying element (28);
- ejecting the granulate portions (102) from the portioning chamber (26) of the portioning device (10) toward an outlet opening (22) of the portioning device (10).

10. Method according to claim 8 or 9,
**characterized in that** the rotational speed of the conveying element (28) is higher than the movement speed of the granulate grains (100) introduced into the portioning chamber (26).

11. Method according to any of claims 8 to 10,
**characterized in that** the impact of the granulate grains (100) on the conveying element (28) is softened by means of an elastically deformable contact surface (42) of the conveying element (28).

## Revendications

1. Machine d'épandage agricole, comportant
- un réservoir de stockage pour des granulés chimiques ;
- au moins un dispositif de portionnement (10) pour la production de portions de granulés (102) à partir de grains de granulés (100) ;
- un appareil de transport pour le transport de granulés (100) depuis le réservoir de stockage dans le dispositif de portionnement (10) ;
et
- au moins un appareil de dépôt pour le dépôt des portions de granulés (102) produites sur une surface agricole utile ;
dans laquelle le dispositif de portionnement (10) comprend une ouverture d'entrée (18) pour des grains de granulés (100), une ouverture de sortie (22) pour la distribution de portions de granulés (102) produites à partir des grains de granulés (100), et au moins un élément de transport (28) pouvant être entraîné en rotation, dans laquelle l'élément de transport (28) est conçu pour regrouper des grains de granulés (100) introduits dans le dispositif de portionnement (100) pendant un mouvement de rotation en portions de granulés (102) ;
dans laquelle le dispositif de portionnement (10) comprend un boîtier (12) à l'intérieur duquel est disposée une chambre de portionnement (26), dans laquelle l'élément de transport (28) pouvant être entraîné en rotation est disposé à l'intérieur de la chambre de portionnement (26) ;
dans laquelle l'élément de transport (28) du dispositif de portionnement (10) est conçu pour accélérer en rotation les grains de granulés (100) se trouvant dans la chambre de portionnement (26) pendant un mouvement de rotation, de telle sorte que les grains de granulés (100) se trouvant dans la chambre de portionnement (26) sont déplacés radialement vers l'extérieur par la force centrifuge, de sorte que les grains de granulés (100) s'accumulent sur la paroi délimitée radialement la chambre de portionnement (26) et y forment des portions de granulés (102) ou agrandissent les portions de granulés (102) déjà existantes ; **caractérisée en ce que** la machine d'épandage comprend un appareil de dosage au moyen duquel la quantité de granulés amenée au dispositif de portionnement (10) peut être réglée, dans laquelle la quantité de granulés et la taille d'une portion de granulés (102) peuvent être réglées par l'intermédiaire de la quantité de granulés amenée au dispositif de portionnement (10).

2. Machine d'épandage agricole selon la revendication 1,
**caractérisée en ce que** l'élément de transport (28) du dispositif de portionnement (10) est conçu pour entrer en contact avec des grains de granulés (100) se trouvant dans la chambre de portionnement (26) pendant un mouvement de rotation et pour pousser lesdits grains de granulés (100) devant lui après l'établissement du contact.

3. Machine d'épandage agricole selon l'une des revendications précédentes,
**caractérisée en ce que** la chambre de portionnement (26) du dispositif de portionnement (10) est délimitée dans la direction radiale par une paroi (40) du boîtier (12), laquelle s'étend au moins partiellement autour de l'axe de rotation (30) de l'élément de transport (28).

4. Machine d'épandage agricole selon l'une des revendications précédentes,
**caractérisée en ce que** l'élément de transport (28) du dispositif de portionnement (10) est conçu de manière à être allongé et/ou comme une aile s'étendant radialement vers l'extérieur.

5. Machine d'épandage agricole selon l'une des revendications précédentes,
**caractérisée en ce que** l'élément de transport (28) du dispositif de portionnement (10) est réalisé en plusieurs parties et/ou au moins dans certaines sections en un matériau élastiquement déformable.

6. Machine agricole d'épandage selon l'une des revendications précédentes,
**caractérisée en ce que** l'élément de transport (28) du dispositif de portionnement (10) comprend un corps déformable, en particulier un corps en caoutchouc déformable (38).

7. Machine d'épandage agricole selon l'une des revendications précédentes,
**caractérisée en ce que** le dispositif de portionnement (10) comprend un appareil d'entraînement (32) qui est conçu pour entraîner en rotation l'élément de transport (28) du dispositif de portionnement (10).

8. Procédé pour la production de portions de granulés (102) au moyen d'un dispositif de portionnement (10) d'une machine d'épandage agricole, comportant les étapes consistant à :
- introduire des grains de granulés (100) dans le dispositif de portionnement (10) ;
- introduire les grains de granulés (100) dans une chambre de portionnement (26) du dispositif de portionnement (10), à l'intérieur de laquelle au moins un élément de transport (28) entraîné en rotation exécute un mouvement de rotation ;
- accélérer en rotation les grains de granulés (100) se trouvant dans la chambre de portionnement (26) par l'élément de transport (28) rotatif ;
- regrouper les grains de granulés (100) introduits dans le dispositif de portionnement (10) en portions de granulés (102) au moyen de l'au moins un élément de transport (28) entraîné en rotation du dispositif de portionnement (10), de telle sorte que les grains de granulés (100) se trouvant dans la chambre de portionnement (26) sont déplacés radialement vers l'extérieur par la force centrifuge, de sorte que les grains de granulés (100) s'accumulent sur la paroi délimitée radialement la chambre de portionnement (26) et y forment des portions de granulés (102) ou agrandissent des portions de granulés (102) déjà existantes ; **caractérisé par** l'étape consistant à :
- régler la quantité de granulés amenée au dispositif de portionnement (10) au moyen d'un appareil de dosage de la machine d'épandage agricole ;
dans lequel la quantité de granulés et la taille d'une portion de granulés (102) sont réglées par l'intermédiaire de la quantité de granulés amenée au dispositif de portionnement (10).

9. Procédé selon la revendication 8,
**caractérisé par** au moins l'une des étapes suivantes :
- entraînement des grains de granulés (100) se trouvant dans la chambre de portionnement (26) par l'élément de transport (28) rotatif, en particulier le long d'un chemin de transport tournant au moins partiellement autour de l'axe de rotation (30) de l'élément de transport (28) ;
- éjection des portions de granulés (102) hors de la chambre de portionnement (26) du dispositif de portionnement (10) en direction d'une ouverture de sortie (22) du dispositif de portionnement (10).

10. Procédé selon la revendication 8 ou 9,
**caractérisé en ce que** la vitesse de rotation de l'élément de transport (28) est supérieure à la vitesse de déplacement des grains de granulés (100) introduits dans la chambre de portionnement (26).

11. Procédé selon l'une des revendications 8 à 10,
**caractérisé en ce que** l'impact des grains de granulés (100) sur l'élément de transport (28) est amorti au moyen d'une surface de contact (42) élastiquement déformable de l'élément de transport (28).
